# EUROPEAN PATENT SPECIFICATION

(11) **EP 0 764 610 B1**
(45) Date of publication and mention of the grant of the patent: **08.12.1999**
(21) Application number: 96907525.8
(22) Date of filing: 08.04.1996
(51) Int. Cl.: C02F 1/44, B01D 61/02

(54) **PLANT AND PROCESS FOR DESALTING MARINE WATER BY REVERSE OSMOSIS, BY MEANS OF HYDROSTATIC PRESSURE**
EINRICHTUNG UND VERFAHREN ZUM ENTSALZEN VON MEERWASSER DURCH UMKEHROSMOSE MITTELS HYDROSTATISCHEN DRUCKS
INSTALLATION ET PROCEDE DE DESSALEMENT DE L'EAU MARINE PAR OSMOSE INVERSE ET PAR PRESSION HYDROSTATIQUE

(30) Priority: 07.04.1995 ES 9500705; 04.08.1995 RU 95113192; 12.12.1995 ES 9502446
(43) Date of publication of application: 26.03.1997
(73) Proprietor: Vazquez-Figueroa Rial, Alberto, 35340 Tias (ES)
(72) Inventor: Vazquez-Figueroa Rial, Alberto, 35340 Tias (ES)
(74) Representative: Ungria Lopez, Javier
(86) International application number: ES9600078
(87) International publication number: WO9631436

(56) References cited:
- ES-A- 8 101 023
- ES-A- 8 203 308
- ES-A- 8 301 842
- FR-A- 2 884 391

## Description

The present invention relates to the technical field of waste water potabilization and sea water desalinization. More specifically, the invention provides a desalinization system that allows the obtainment of fresh or purified water with an installation of reduced construction cost that allows purified or desalinated water to be obtained at a low energy cost and without complicated maintenance operations.

The desalinization of salt water and the purification of waste water is conventionally done by two general systems, in other words, the evaporation of water and collection with recondensation of steam and filtration of water, through filters or, in the case of reverse osmosis desalinization, through semipermeable membranes.

Desalinization by osmosis is used in sea water potabilization equipment in ships and in different coastal areas, in desalinization plants used to provide the population and/or agriculture with fresh water.

Reverse osmosis desalinization implies that the salt water must be forced through filters or membranes applying a great pressure (approximately 70 atmospheres) whose creation requires a high energy consumption, aside from expensive and relatively complex equipment. This especially affects large desalinization plants that supply large amounts of fresh water in coastal areas whose construction requires very high investments and whose maintenance is complex and costly, which results in, along with the above mentioned high energy consumption, the high price of the desalinated water.

In order to overcome the high energy cost, Spanish patent ES-A-488,215 describes a water desalinization plant with a reverse osmosis hydrostatic system which by means of some wells drilled in the subsoil, establishes a water column whose weight exerts a pressure on the osmotic modules so that the phenomenon of reverse osmosis is produced, thus replacing the impeller pumps of traditional plants. However, this plant though it reduced the energy cost of the cubic meter of desalinated water regarding the energy cost of traditional desalinization plants, it still required high energy costs.

The present invention is used to overcome the above cited inconveniences of conventional desalinization plants as well as to reduce even more the energy cost of the cubic meter of desalinated water and the plant construction costs.

As indicated in its title and as defined in the claims, the present invention refers to a reverse osmosis desalinization plant which in order to create the necessary pressure in the reverse osmosis modules takes advantage of the pressure that the weight of an established salt water column exerts on said modules. The desalinization plant is located on land with its reverse osmosis modules placed at a lower level with regard to sea level, in order to obtain the necessary height of the salt water column in order to obtain the required pressure in the modules.

A main characteristic of the desalinization plant is that it has an elevated head tank for the accumulation of salt water. Said tank allows the accumulation of a certain amount of salt water, that is pumped during those hours in which the electric rates are cheaper, in such a way that the plant operates the rest of the day without needing to consume electric energy and the energy consumed for pumping turns out to be cheaper. Besides, it makes it possible to ensure a constant stable pressure on the osmotic modules upon not depending on the constant operation of a series of pumps, such as in the case of traditional plants.

On the other hand, elevating the head tank allows the brine resulting from the reverse osmosis process to rise to a certain height by natural pressure without the need of any pumping. This produces, on the one hand, the advantage that it is not necessary to include pumps exposed to the great corrosive aggresivity of the brine and, on the other hand, that said head tank, upon comprising a water reserve, allows the carrying out of maintenance and repair operations, without having to stop the operation of the desalinization plant.

The water column is established in perforations in the ground, under the level of sea level.

The result of the described process is that the total energy cost of the cubic meter of desalinated water can be substantially reduced.
Figure 1 is a section of a possible embodiment of the main pipelines that house the ducts or channels to transport the desalinated water water, pretreated salt water and brine.
Figure 2 is a first embodiment of the invention.
Figure 3 is a second embodiment.
Figure 4 is an embodiment of the underground part of an embodiment according to figures 1 and 3.

Hereinafter and referring to the figures, a description is made of some preferred embodiments of the invention.

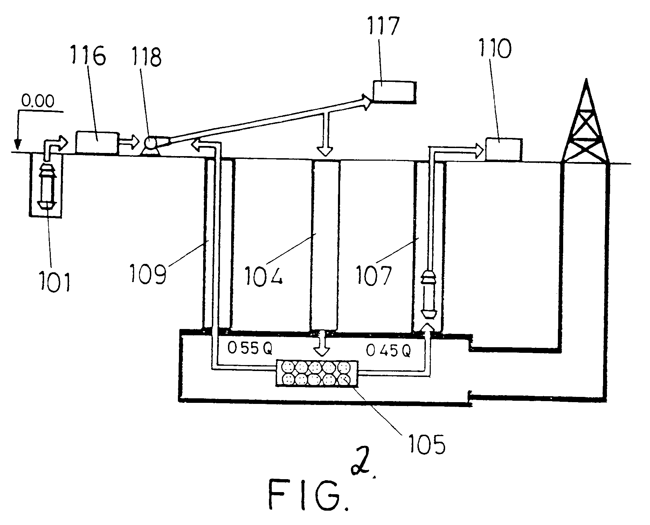

Figure 2 shows a first embodiment of the present invention. According to this embodiment, the desalinization plant comprises some first wells (104) that receive salt water from the sea. In the base of these first wells (104) there are batteries of semipermeable membranes of the type adequate to carry out the phenomenon of reverse osmosis. While the wells (104) are full of salt water, the phenomenon of reverse osmosis is produced by means of which one part, typically 55%, of the salt water introduced in the well is converted into liquid wastes ("backwater" or brine) that is loaded with all the salts present in the salt water and it comes out of the membranes system (105) at a high pressure, for example about 68 Atm. in the event that the water column over the membranes (105) has a height of about 702 meters (being based on a sea water density of 1.03 gr/cm³, creating a pressure of 70 Atm. in the base of the wells (104) where the membranes (105) are located).

The remaining 45% of the flow of salt water introduced in the wells is converted into totally salt-free drinking water with a residual pressure that is relatively low at the outlet, of 1 to 2 Atm. having a water column of about 702 meters over the membranes (105).

This means that exactly at the same rate as the salt water from the sea and once subjected to the same pretreatment systems (116) as in a conventional plant, the water is introduced into the first wells (104), almost half of the water is converted into fresh water, while the brine rises, taking into account the density thereof (some 1.06 gr/cm³ in the event that the salt water introduced in the vertical wells (104) is normal sea water), by a second battery of wells (109) built next to the first wells (104) that receive the salt water, at some 646 m. (as the intake first wells (104) have a depth of 702 m) over the output level of the membranes (105).

For the purpose of avoiding the pumping of the brine from the static level that it reaches inside the second wells (109) up to the surface and therefore the energy cost that this pumping would involve, as well as the cost itself of some very expensive and delicate pumps as brine has to be pumped, in the preferred embodiment shown in figure 2, the device is designed in such a way that the brine reaches the drain through the mouth of the second wells (109) of the second battery by natural pressure. In order to achieve this effect, it is necessary to increase the load in the mouth of the first salt water injection wells (104), and once the density of sea water is considered, by 63 m. For this purpose, the desalinization plant has been provided with a head tank (117) that once the different densities of the fluids that we are dealing with as well as the load losses produced in the system are considered, it would be placed some 70 m. above the level of the mouth of the wells, for the purpose of attaining a constant pressure in the membranes (105), which is fundamental for the good operation and duration thereof, at the same time that it achieves that the brine reaches the surface without any type of pumping. Logically, upon using the head tank (117) placed at a certain height with regard to the surface, the depth of the first wells (104) that receive the crude salt water can be reduced in correspondence with said height.

The sea salt water, once subjected to the pertinent pretreatment in a pretreatment system (116), is pumped by pumps (118) to the head tank (117).

The fresh water that, typically, in the case described could correspond to 45% of the total crude water, comes through the membranes at a residual pressure of 1 to 2 Atm., which represents between 10 and 20 m. of height over the output level of the membrane system. From this depth, the water is pumped, through a third well system (107) to a surface tank (110), that remains ready for the distribution thereof.

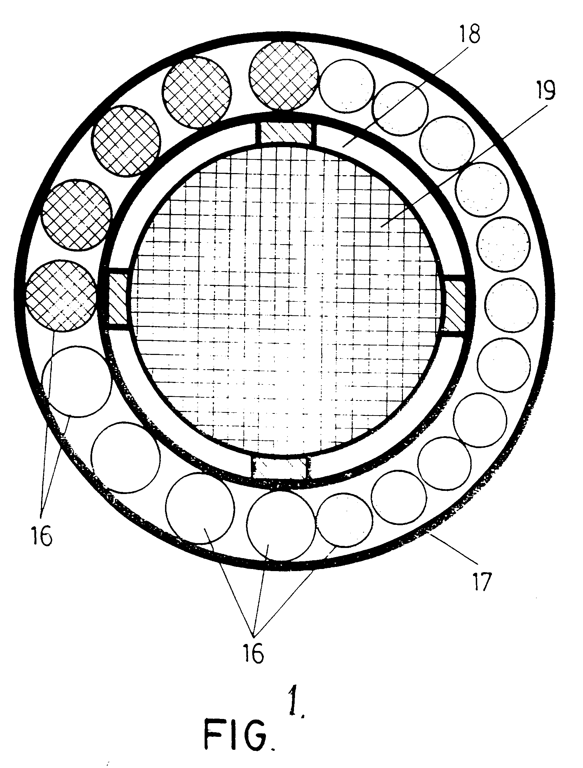

According to a second embodiment of the invention, shown in figures 1, 3, and 4, the first wells (104), second wells (109) and/or third (107) wells for salt water, brine and desalinated water, respectively, can be housed inside a main well (119) with a larger diameter. The first wells (104), second wells (109) and third (107) wells can, in this case, by comprised by pipelines located in said main well (119) and/or by inside vertical walls of the first well (119), by means of which ducts corresponding to said first wells (104) second wells (109) and third (107) wells are formed.

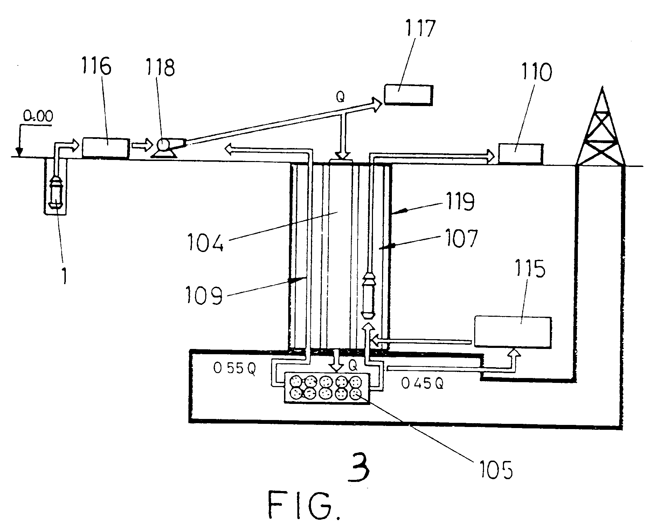

In figure 3 one can see, schematically, the desalinization plant according to the second embodiment. This corresponds essentially to the embodiment illustrated in figure 2, but it includes the main well in which the first wells (104), second wells (109) and third (107) wells are located. This way of making the structure of the wells can facilitate the practical implementation of the wells, with the subsequent reduction of the costs involved. In figure 3, one can also see an underground desalinated water tank (115).

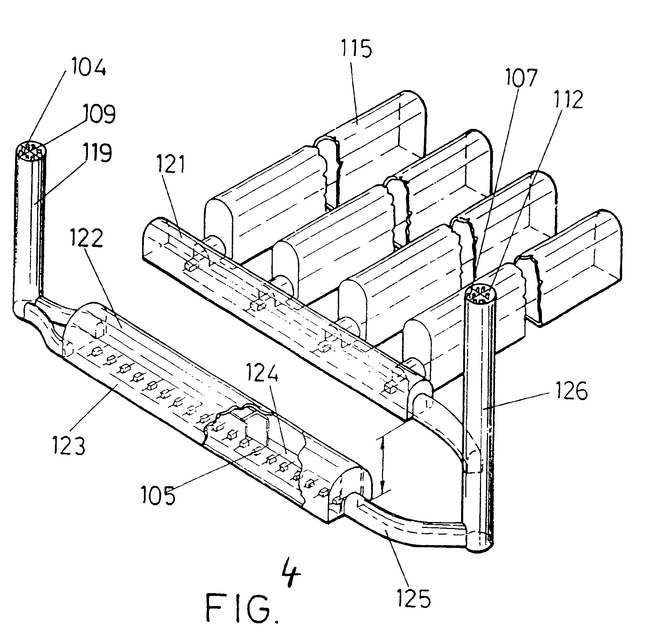

In figure 4 one can see a perspective view of an embodiment of an underground part of the present invention according to the embodiment shown in figure 3. A larger well (119) comprises a first well (104) and a second well (109), separated by a vertical wall that divides the inside of said larger well (119) into two. The first well (104) and second (109) well are communicated by their bottom part with a desalinization chamber (112), inside of which the semipermeable filters or membranes (105) are housed. The semipermeable filters or membranes (105) are, according to this embodiment, placed between a first essentially horizontal duct (123) that communicates with the first well (104) and an essentially horizontal duct (124) that communicates with the second well (109). The desalinization chamber (122) has a desalinated water outlet that communicates by means of a duct (125) with a fourth well (126) and, through this, with a desalinated pumping chamber (121) that communicates with a series of underground desalinated water tanks (115). The desalinated water pumping chamber (121) may be located at a certain height (for example, 15 meters) above the desalinated water output level of the filters or membranes (5), given that the water comes out of them under a certain pressure and, therefore, it can rise up to the desalinated water pumping chamber (121) without the need of pumping. From the underground desalinated water tanks (115) and the pumping chamber (121), the desalinated water is pumped to the surface through ducts or second wells (107), housed inside the fourth well (126). The fourth well (126) can also house a lift (112).

The energy production cost of a cubic meter of surface drinking water ready for subsequent distribution can be calculated for example for a plant according to the second preferred embodiment described above and with a production of 200,000 m³/day. This calculation is based on the commercial equipment existing nowadays.

With the suitable dimensions of the underground fresh water tank (115) and of the head tank (117), enough water can be stored in these tanks so as to pump the salt water up to the head tank (117) and the pumping the fresh water to the surface can be done mainly at night, which implies the possibility of using night electricity rates. The plant production during the day can therefore be done essentially without any pumping given that the liquid wastes go up to the surface through the second wells (109) with the need of any pumping.

Basically, one can calculate an energy cost of 0.7 kWh corresponding to the consumption of the pumps that in the first operating stage take the water from the sea and by means of a filtering system free it of impurities. This consumption is the maximum, that nowadays and for the worst filtering conditions corresponds to a classic plant. In addition, a consumption of 0.50 kWh to lift all the crude salt water to the head tank is calculated.

Finally, one can calculate a consumption of 2.01 kWh to raise desalinated drinking water from a depth of 640 m. to the distribution tank.

The total consumption therefore corresponds to 3.21 kWh.

Presently, in a conventional desalinization plant and due to the need to pump 100 % of the crude water through the membrane system at a pressure of 70 Atm., a minimum is consumed, for the same filtering conditions and considering the maximum recovery of energy that can be obtained in the turbine pumps that are conventionally used, the corresponding total consumption amounts to 4.6 kWh.

As one can see, the energy savings that is achieved by the present invention is substantial.

## Claims

1. Desalinization plant, that comprises
- at least one salt water inlet (101);
- means to lead the salt water coming from said salt water inlet;
- means to establish a salt water column (104);
- reverse osmosis desalinization means (105) located in the area of the bottom end of said salt water column (104), said reverse osmosis desalinization means (105) being located underground at a level below sea level;
- means to lead desalinated water (107) coming from said underground reverse osmosis desalinization means (105);
- means to lead brine (109) coming from said underground reverse osmosis desalinization means (105) to the surface; wherein
- said means to establish a salt water column (3, 104) have a height so that the weight of said salt water column exerts a pressure that gives rise to the production of the phenomenon of reverse osmosis in the reverse osmosis desalinization means (105), so that the salt water is separated into desalinated water and brine;
characterized in that
- it includes at least one salt water head tank (117) located at a certain height above sea level, said head tank (117) being in fluid communication with said salt water column, said head tank (117) being located at a sufficient height so that the brine reaches the surface without the need of pumping said brine, and in that there are pumping means (118) to pump salt water from said salt water inlet to said head tank (117).

2. Desalinization plant according to claim 1 characterized in that the head tank (117) has a salt water accumulation capacity that suffices so as to supply the desalinization plant with salt water during a substantial amount of time without having to receive water from the pumping means (118).

3. Desalinization plant according to claim 2, characterized in that said accumulation capacity corresponds to 2/3 of the total salt water treated daily.

4. Desalinization plant according to any of the above claims, characterized in that it includes water pretreatment means for pretreatment of salt water coming out of the head tank (117) said pretreatment means being located at an intermediate height between the salt water head tank (117) and the top area of the salt water column (104).

5. Desalinization plant according to claim 4, characterized in that the water pretreatment means are located approximately 40 meters under the head tank (117).

6. Desalinization plant according to any of the above claims, characterized in that the salt water column (104) has a height of approximately 700 meters.

7. Desalinization plant according to any of the above claims, characterized in that that head tank is located approximately 740 meters above the reverse osmosis desalinization means.

8. Desalinization plant according to any of the previous claims, characterized in that the height of the salt water column (104) is such that the weight of said water column exerts enough pressure so as to produce the phenomenon of reverse osmosis in she reverse osmosis desalinization means (105).

9. Desalinization plant according to claim 8, characterized in that it includes pumping means (12) to pump the desalinated water coming from the reverse osmosis desalinization means (105) to the surface.

10. Desalinization plant according to any of the above claims, characterized in that the reverse osmosis desalinization means (105) comprise filters or semi-permeable membranes.

11. Desalinization plant according to any of the above claims, characterized in that it comprises a tank (110, 115) to collect desalinated water.

12. Desalinization plant according to claim 11, characterized in that said tank (110, 115) is elevated above said reverse osmosis desalinization means (105) at a height so that the desalinated water reaches said tank by natural pressure without the need of pumping.

13. Desalinization plant according to any of the claims 1-12, characterized in that the salt water ducting means, the brine ducting means (109) and the means to establish the water column (104) consist of a plurality essentially vertical pipelines (16) located in the inside periphery of a main essentially vertical pipeline with a larger diameter than the previous ones.

14. Desalinization plant according to claim 13, characterized in that said main pipeline (17, 119) with a larger diameter includes a free inside space (18) for a sliding platform (19).

15. Desalinization plant according to any of the claims 1-12, characterized in that the brine ducting means and the means to establish the water column, include first and second wells made in the ground.

16. Desalinization plant according to any of the claims 1-12, characterized in that said desalinization plant is underground communicating the head tank (117) with the reverse osmosis desalinization means (105) by pipelines housed in vertical perforations.

17. Method to desalinate water by reverse osmosis, by natural pressure, according to which
- salt water is introduced into at least one duct in which reverse osmosis desalinization means (105) have been provided for, said reverse osmosis desalinization means being located underground at a level below sea level;
- the reverse osmosis desalinization means (105) being located in such a way that the salt water column (104) that is located above said reverse osmosis desalinization means in said duct, exerts pressure which gives rise to the production of the phenomenon of reverse osmosis in the reverse osmosis desalinization means (105), obtaining desalinated water and brine;
characterized in that
- before introducing the salt water in said duct, the salt water is pumped to an elevated head tank (117), located at a sufficient height so that the brine coming from the reverse osmosis desalinization means reaches the surface without the need of pumping said brine.

18. Method according to claim 17, characterized in that the salt water is pumped to the elevated head tank (117) for a certain amount of time.

19. Method according to claim 18, characterized in that the salt water that is led to the elevated head tank (117) is stored in said tank for a period of time complementary to the amount of time corresponding to the pumping of salt water.

20. Method according to claim 19, characterized in that said certain amount of storage time of salt water corresponds to 2/3 of the total daily operating time.

## Patentansprüche

1. Entsalzungsanlage, die umfaßt
- zumindest einen Salzwasssereinlaß (101);
- eine Leitungseinrichtung für das von dem Salzwassereinlaß kommende Salzwasser;
- eine Einrichtung zum Herstellen einer Salzwassersäule (104);
- eine Umkehrosmose-Entsalzungseinrichtung (105), die sich im Bereich des unteren Endes der Salzwassersäule (104) befindet, wobei sich die Umkehrosmose-Entsalzungseinrichtung (105) unterirdisch auf einer Höhe unterhalb der Meereshöhe befindet;
- eine Leitungseinrichtung für entsalztes Wasser (107), das unterirdisch von der Umkehrosmose-Entsalzungseinrichtung (105) kommt;
- eine Leitungseinrichtung für Salzsole (109), die von der Umkehrosmose-Entsalzungseinrichtung (105) zu der Oberfläche kommt; wobei
- die Einrichtung zum Herstellen einer Salzwassersäule (3, 104) eine solche Höhe aufweist, daß das Gewicht der Salzwassersäule einen Druck ausübt, der die Erzeugung des Phänomens der Umkehrosmose in der Umkehrosmose-Entsalzungseinrichtung (105) veranlaßt, so daß das Salzwasser in entsalztes Wasser und Salzsole getrennt wird; **dadurch gekennzeichnet,** daß
- sie zumindest einen oberen Salzwasser-Behälter (117) umfaßt, der auf einer gewissen Höhe oberhalb der Meereshöhe angeordnet ist, der obere Behälter (117) in Fluidverbindung mit der Salzwassersäule ist, sich der obere Behälter (117) auf einer ausreichenden Höhe befindet, so daß die Salzsole die Oberfläche ohne die Notwendigkeit erreicht, die Salzsole zu pumpen, und daß es eine Pumpeinrichtung (118) gibt, um Salzwasser von dem Salzwassereinlaß zu dem oberen Behälter (117) zu pumpen.

2. Entsalzungsanlage, gemäß Anspruch 1, **dadurch gekennzeichnet,** daß der obere Behälter (117) ein Salzwasseransammelvolumen aufweist, das ausreicht, die Entsalzungsanlage mit Salzwasser während einer wesentlichen Zeitdauer zu versorgen, ohne daß Wasser von der Pumpeinrichtung (118) erhalten werden muß.

3. Entsalzungsanlage, gemäß Anspruch 2, **dadurch gekennzeichnet,** daß das Sammelvolumen 2/3 des gesamten, täglich verarbeiteten Salzwassers entspricht.

4. Entsalzungsanlage, gemäß irgendeinem der vorhergehenden Ansprüche, **dadurch gekennzeichnet,** daß sie eine Wasservorbehandlungseinrichtung zur Vorbehandlung von Salzwasser umfaßt, das aus dem oberen Behälter (117) kommt, wobei sich die Vorbehandlungseinrichtung auf einer Zwischenhöhe zwischen dem Salzwasser-obere Behälter (117) und dem oberen Bereich der Salzwassersäule (104) befindet.

5. Entsalzungsanlage, gemäß Anspruch 4, **dadurch gekennzeichnet,** daß die Wasservorbehandlungseinrichtung ungefähr 40 Meter unterhalb des oberen Behälters (117) angeordnet ist.

6. Entsalzungsanlage, gemäß irgendeinem der obigen Ansprüche, **dadurch gekennzeichnet,** daß die Salzwassersäule (104) eine Höhe von ungefähr 700 Metern aufweist.

7. Entsalzungsanlage, gemäß irgendeinem der vorhergehenden Ansprüche, **dadurch gekennzeichnet,** daß sich der obere Behälter ungefähr 740 Meter oberhalb der Umkehrosmose-Entsalzungseinrichtung befindet.

8. Entsalzungsanlage, gemäß irgendeinem der vorhergehenden Ansprüche, **dadurch gekennzeichnet,** daß die Höhe der Salzwassersäule (104) derart ist, daß das Gewicht der Salzwassersäule einen ausreichenden Druck ausübt, damit das Phänomen der Umkehrosmose in der Umkehrosmose-Entsalzungseinrichtung (105) erzeugt wird.

9. Entsalzungsanlage, gemäß Anspruch 8, **dadurch gekennzeichnet,** daß sie eine Pumpeinrichtung (12) umfaßt, um das entsalzte Wasser, das von der Umkehrosmose-Entsalzungseinrichtung (105) kommt, zu der Oberfläche zu pumpen.

10. Entsalzungsanlage, gemäß irgendeinem der obigen Ansprüche, **dadurch gekennzeichnet,** daß die Umkehrosmose-Entsalzungseinrichtung (105) Filter oder halbdurchlässige Membranen umfaßt.

11. Entsalzungsanlage, gemäß irgendeinem der obigen Ansprüche, **dadurch gekennzeichnet,** daß sie einen Behälter (110, 115) umfaßt, um entsalztes Wasser zu sammeln.

12. Entsalzungsanlage, gemäß Anspruch 11, **dadurch gekennzeichnet,** daß der Behälter (110, 115) oberhalb der Umkehrosmose-Entsalzungseinrichtung (105) auf einer Höhe erhöht ist, so daß das entsalzte Wasser den Behälter, ohne die Notwendigkeit zu pumpen, durch den natürlichen Druck erreicht.

13. Entsalzungsanlage, gemäß irgendeinem der Ansprüche 1-12, **dadurch gekennzeichnet,** daß die Salzwasser-Leitungseinrichtung, die Salzsole-Leitungseinrichtung (109) und die Einrichtung zur Herstellung der Wassersäule (104) aus einer Mehrzahl im wesentlichen vertikaler Rohre (116) besteht, die sich innerhalb des Umfangs eines im wesentlichen vertikalen Hauptrohres mit einem größeren Durchmesser als die vorhergehenden befindet.

14. Entsalzungsanlage, gemäß Anspruch 13, **dadurch gekennzeichnet,** daß das Hauptrohr (17, 119) mit einem größeren Durchmesser einen freien Innenraum (18) für eine Gleitplattform (19) umfaßt.

15. Entsalzungsanlage, gemäß irgendeinem der Ansprüche 1-12, **dadurch gekennzeichnet,** daß die Salzsole-Leitungseinrichtung und die Einrichtung zur Herstellung der Wassersäule einen ersten und einen zweiten unteridisch hergestellten Brunnen umfassen.

16. Entsalzungsanlage, gemäß irgendeinem der Ansprüche 1-12, **dadurch gekennzeichnet,** daß die Entsalzungseinrichtung im Boden den oberen Behälter (117) mit der Umkehrosmose-Entsalzungseinrichtung (105) durch Rohre verbindet, die in vertikalen Öffnungen aufgenommen sind.

17. Verfahren zur Entsalzung von Wasser durch Umkehrosmose durch natürlichen Druck gemäß dem
- Salzwasser in zumindest eine Leitung eingeführt wird, in der eine Umkehrosmose-Entsalzungseinrichtung (105) vorgesehen worden ist, wobei sich die Umkehrosmose-Entsalzungseinrichtung unterirdisch auf einer Höhe unterhalb der Meereshöhe befindet;
- die Umkehrosmose-Entsalzungseinrichtung (105) derart angeordnet ist, daß die Salzwassersäule (104), die oberhalb der Umkehrosmose-Entsalzungseinrichtung in der Leitung angeordnet ist, einen Druck ausübt, der die Erzeugung des Phänomens der Umkehrosmose in der Umkehrosmose-Entsalzungseirtrichtung (105) veranlaßt, wodurch entsalztes Wasser und Salzsole erhalten werden; **dadurch gekennzeichnet,** daß
- vor der Einführung des Salzwassers in die Leitung das Salzwasser zu einem erhöhten oberen Behälter (117) gepumpt wird, der sich auf einer ausreichenden Höhe befindet, so daß die von der Umkehrosmose-Entsalzungseinrichtung kommende Salzsole die Oberfläche, ohne die Notwendigkeit die Salzsole zu pumpen, erreicht.

18. Verfahren gemäß Anspruch 17, **dadurch gekennzeichnet,** daß das Salzwasser zu dem erhöhten oberen Behälter (117) während einer bestimmten Zeitdauer gepumpt wird.

19. Verfahren gemäß Anspruch 18, **dadurch gekennzeichnet,** daß das Salzwasser, das zu dem erhöhten oberen Behälter (117) geleitet wird, in dem Behälter während einer Zeitdauer gespeichert wird, die zu der Zeitdauer komplementär ist, die dem Pumpen von Salzwasser entspricht.

20. Verfahren gemäß Anspruch 19, **dadurch gekennzeichnet,** daß die bestimmte Größe der Speicherzeit von Salzwasser 2/3 der gesamten, täglichen Betriebszeit entspricht.

## Revendications

1. Installation de dessalement, qui comprend :
au moins une entrée (101) d'eau salée,
un dispositif destiné à conduire l'eau salée provenant de l'entrée d'eau salée,
un dispositif destiné à établir une colonne (104) d'eau salée,
un dispositif de dessalement (105) par osmose inverse placé dans la région d'extrémité inférieure de la colonne (104) d'eau salée, le dispositif (105) de dessalement par osmose inverse étant disposé sous forme enterrée à un niveau inférieur à celui du niveau de la mer,
un dispositif destiné à conduire l'eau dessalée (107) provenant du dispositif enterré (105) de dessalement par osmose inverse, et
un dispositif destiné à conduire une saumure (109) provenant du dispositif enterré (105) de dessalement par osmose inverse vers la surface, dans laquelle
le dispositif destiné à établir une colonne (3, 104) d'eau salée a une hauteur telle que le poids de la colonne d'eau salée exerce une pression qui provoque la production du phénomène d'osmose inverse dans le dispositif (105) de dessalement par osmose inverse, si bien que l'eau est séparée en eau dessalée et en saumure, caractérisée en ce que
elle comprend au moins un réservoir de tête (117) d'eau salée placé à une certaine hauteur au-dessus du niveau de la mer, le réservoir de tête (117) communiquant avec la colonne d'eau salée, le réservoir de tête (117) étant placé à une hauteur suffisante pour que la saumure atteigne la surface sans qu'il soit nécessaire de la pomper, et en ce que
un dispositif de pompage (118) est destiné à pomper l'eau salée de l'entrée d'eau salée vers le réservoir de tête (117).

2. Installation de dessalement selon la revendication 1, caractérisée en ce que le réservoir de tête (117) a une capacité d'accumulation d'eau salée qui suffit pour l'alimentation de l'installation de dessalement d'eau salée pendant une partie importante du temps sans que la réception de l'eau du dispositif de pompage (118) soit nécessaire.

3. Installation de dessalement selon la revendication 2, caractérisée en ce que la capacité d'accumulation correspond aux deux-tiers de l'eau salée traitée au total quotidiennement.

4. Installation de dessalement selon l'une quelconque des revendications précédentes, caractérisée en ce qu'elle comprend un dispositif de traitement préalable de l'eau destiné au traitement préalable de l'eau salée provenant du réservoir de tête (117), le dispositif de traitement préalable étant placé à une hauteur intermédiaire entre celle du réservoir de tête (117) d'eau et celle de la région supérieure de la colonne (104) d'eau salée.

5. Installation de dessalement selon la revendication 4, caractérisée en ce que le dispositif de traitement préalable d'eau est placé à 40 m environ au-dessous du réservoir de tête (117).

6. Installation de dessalement selon l'une quelconque des revendications précédentes, caractérisée en ce que la colonne (104) d'eau salée a une hauteur d'environ 700 m.

7. Installation de dessalement selon l'une quelconque des revendications précédentes, caractérisée en ce que le réservoir de tête est à 740 m environ au-dessus du dispositif de dessalement par osmose inverse.

8. Installation de dessalement selon l'une quelconque des revendications précédentes, caractérisée en ce que la hauteur de la colonne (104) d'eau salée est telle que le poids de la colonne d'eau crée une pression suffisante pour la production du phénomène d'osmose inverse dans le dispositif (105) de dessalement par osmose inverse.

9. Installation de dessalement selon la revendication 8, caractérisée en ce qu'elle comprend un dispositif de pompage (12) destiné à pomper l'eau dessalée provenant du dispositif (105) de dessalement par osmose inverse vers la surface.

10. Installation de dessalement selon l'une quelconque des revendications précédentes, caractérisée en ce que le dispositif (105) de dessalement par osmose inverse comporte des filtres ou des membranes semi-perméables.

11. Installation de dessalement selon l'une quelconque des revendications précédentes, caractérisée en ce qu'elle comprend un réservoir (110, 115) destiné à collecter l'eau dessalée.

12. Installation de dessalement selon la revendication 11, caractérisée en ce que le réservoir (110, 115) est élevé au-dessus du dispositif (105) de dessalement par osmose inverse à une hauteur telle que l'eau salée atteint le réservoir par sa pression naturelle sans qu'un pompage soit nécessaire.

13. Installation de dessalement selon l'une quelconque des revendications 1 à 12, caractérisée en ce que le dispositif à conduit d'eau salée, le dispositif (109) à conduit de saumure et le dispositif d'établissement de la colonne d'eau (104) sont constitués de plusieurs canalisations essentiellement verticales (16) placées à la périphérie interne d'une canalisation principale essentiellement verticale de plus grand diamètre que les autres canalisations.

14. Installation de dessalement selon la revendication 13, caractérisée en ce que la canalisation principale (17, 119) de plus grand diamètre comprend un espace interne libre (18) destiné à une plate-forme coulissante (19).

15. Installation de dessalement selon l'une quelconque des revendications 1 à 12, caractérisée en ce que le dispositif à conduit de saumure et le dispositif d'établissement de la colonne d'eau comportent un premier et un second puits formés dans le sol.

16. Installation de dessalement selon l'une quelconque des revendications 1 à 12, caractérisée en ce que l'installation de dessalement est souterraine et fait communiquer le réservoir de tête (117) avec le dispositif (105) de dessalement par osmose inverse à l'aide de canalisations logées dans des perforations verticales.

17. Procédé de dessalement d'eau par osmose inverse à l'aide d'une pression naturelle, selon lequel
l'eau salée est introduite dans au moins un conduit dans lequel a été placé un dispositif (105) de dessalement par osmose inverse, le dispositif de dessalement par osmose inverse étant placé sous forme enterrée à un niveau inférieur au niveau de la mer, et
le dispositif (105) de dessalement par osmose inverse est placé de manière que la colonne (104) d'eau salée qui est placée au-dessus du dispositif de dessalement par osmose inverse dans le conduit exerce une pression qui provoque la production d'un phénomène d'osmose inverse dans le dispositif (105) de dessalement par osmose inverse avec obtention d'eau dessalée et de saumure, caractérisé en ce que
avant introduction d'eau salée dans le conduit, l'eau salée est pompée dans un réservoir élevé de tête (117) placé à une hauteur suffisante pour que la saumure provenant du dispositif de dessalement par osmose inverse atteigne la surface sans nécessiter un pompage de la saumure.

18. Procédé selon la revendication 17, caractérisé en ce que l'eau salée est pompée vers le réservoir élevé de tête (117) pendant un certain temps.

19. Procédé selon la revendication 18, caractérisé en ce que l'eau salée qui est conduite vers le réservoir élevé de tête (117) est conservée dans le réservoir pendant une période complémentaire de la période correspondant au pompage de l'eau salée.

20. Procédé selon la revendication 19, caractérisé en ce que le temps de stockage de l'eau salée correspond aux deux-tiers du temps total de fonctionnement quotidien.
